# EUROPEAN PATENT SPECIFICATION

(11) **EP 1 381 942 B1**
(45) Date of publication and mention of the grant of the patent: **07.06.2006**
(21) Application number: 01271579.3
(22) Date of filing: 10.12.2001
(51) Int. Cl.: G06F 9/44

(54) **SELF-DETERMINING COMMAND PATH ARCHITECTURE BACKGROUND OF THE INVENTION**
SELBSTBESTIMMENDE BEFEHLSWEGARCHITEKTUR HINTERGRUND DER ERFINDUNG
ARCHITECTURE DE CHEMIN DE COMMANDE A AUTODETERMINATION

(30) Priority: 18.12.2000 US 739516
(43) Date of publication of application: 21.01.2004
(73) Proprietor: Koninklijke Philips Electronics N.V., 5621 BA Eindhoven (NL)
(72) Inventor: LEWIS, Jody, W., NL-5656 AA Eindhoven (NL)
(74) Representative: Groenendaal, Antonius W. M.
(86) International application number: PCT/IB2001/002439
(87) International publication number: WO 2002/050669

(56) References cited:
- EP-A- 0 634 719
- GB-A- 2 326 254
- US-A- 5 420 981
- US-A- 5 801 696
- US-A- 6 115 734

## Description

### FIELD OF THE INVENTION

The invention relates to software design and particularly to a mechanism for software design for real-time embedded systems that facilitates deterministic behavior by providing data objects that include path objects that permit processing nodes to be defined independently of special handling requirements for each data object.

### BACKGROUND

Object-Oriented (O-O) design is a method of design that 1) results in the decomposition of a problem in terms of objects and 2) employs separate models for the static (object structures) and dynamic (process architecture) design of a system. In the context of the object model, an "object" is a programmatic entity that possesses state, behavior, and identity. The term "class" is applied to a definition of the common structure and behavior of a set of objects of a given type.

The object model has four major elements; abstraction, encapsulation, modularity, and hierarchy. Abstraction allows the separation of an object's essential behavior from its implementation. Encapsulation allows the details of an object that do not contribute to its essential characteristics to be hidden from view. Modularity allows the clustering of logically-related abstractions, thereby promoting reuse. Hierarchy allows the commonality of objects to be leveraged by providing for the inheritance of the behavior of another object or including other objects to achieve a desired behavior.

Each object within an O-O system is defined by an interface and an implementation. A software client external to an object depends completely on its interface and not the details of its implementation. The implementation of an object provides the mechanisms and the details that define its behavior. O-O programs are collections of objects that relate to each other through their interfaces.

In a sense, each object is a "black box." Its interface consists of messages that the black box sends and receives. Objects actually contain code (sequences of computer instructions) and data (information which the instructions operate on). Traditionally, code and data have been kept apart. For example, in the C language, units of code are called "functions," while units of data are called "structures." Functions and structures are not formally connected in C. A C function can operate on more than one type of structure, and more than one function can operate on the same structure. This is not true for O-O software. In O-O programming, code and data are merged into a single indivisible thing -- an object. A programmer using an object should not need to look at the internals of the object once the object has been defined. All connections with the object's internal programming are accomplished via messages; i.e., the object's interface.

A computer typically runs several processes, or "threads," simultaneously. Each thread has its own stream of computer instructions and operates independently of other threads. The stream of computer instruction would typically be encapsulated in one or more objects, termed "processing objects." The operating system is responsible for allocating CPU (central processing unit) time to each thread based on priorities and other criteria.

In defining a process architecture some O-O programs use an approach, called "pipelining," that uses queues to mediate the transfer of a data object among processing objects. Several process threads may be created and each is associated with an input queue. In a pipelined system, a thread gets data objects from its input queue, processes the data object, and then places it in another queue (some other thread's input queue).

What happens to a data object during the course of processing by a processing object may determine what queue the data object has to be sent to after being processed by the processing object. That means, the processing object has to have the logic built into it to know which processing object's queue to place the data object into after it is finished processing the data object.

Document US 5,801,696 discloses an operating system, where event queues are used to direct events to the correct application.

Document EP 634 719 discloses a method of moving processes within a distributed computer network. In order to facilitate such movement, each process is supervised by a so called agent, which has pointers to the relevant data. This agent can be moved between different process engines, running on different computers, thereby effecting a certain process in different places.

O-O design and design patterns are also applicable to real-time embedded systems, systems developed for a real-world application such as a control mechanism for a piece of equipment. Real-time systems like these are required to satisfy precise timing deadlines, have predictable response times, and must be stable when overloaded. Such a system is said to be "deterministic" if it can be guaranteed to respond by a certain time no matter what happens. But high volume deterministic processing is difficult due to the complex processing required for each command (data object). Each command may require parsing, interpretation, extrapolation, execution, status updating, and feedback to the object that placed the data message or data object in its queue. Trying to do all of this in one step makes it difficult to meet hard timing deadlines. Breaking the large task into smaller manageable tasks makes it difficult to keep track of commands as they move through the system. What is needed, is a design that provides an architecture that allows the tasks to be cleanly separated as in O-O systems and allows keeping track of data objects as they move about the system.

### SUMMARY OF THE INVENTION

The invention allows the creation of path objects to connect processing objects logically in a system. Any number of path objects can be created. The design isolates the command objects and the processing objects from any knowledge of the command object's paths through the system. The path object itself is an organization of the available queues in the system. At each step, there is a queue for the normal path, one for the error path, and any number of other queues for other processing outcomes.

Each processing object in a path is associated with an input queue. Each command object is associated with a path object. When a command is retrieved from the processing object's input queue, it is processed and then sent to the next queue in its path (for example, either normal path or error path). This allows each processing object to focus on its task without being encumbered by details of the command or its task in the system. This is particularly useful in addressing high-volume deterministic commands because the schedule and execution time of the critical processing objects can be tightly controlled. Other steps in the command path can be processed at a lower priority.

In essence, in the environment of an O-O system in which data is transferred between threads by queues, the invention provides that the destination queue for a given data object depends on a path object defined for the data object. In an embodiment, each instance of a data object corresponds to a path object. When a processing object is finished processing the data object, it consults the path object to determine which queue to put the data object in. Thus, if any change in the command path needs to be made, it can be defined in the path object, rather than by making changes in the processing objects that handle the data objects.

The invention will be described in connection with certain preferred embodiments, with reference to the following illustrative figures so that it may be more fully understood. With reference to the figures, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

### BRIEF DESCRIPTION OF THE DRAWING

Fig. 1 is a flow chart illustrating a process for a processing object to determine a destination queue responsively to a data object according to an embodiment of the present invention.
Fig. 2 is a block diagram illustrating information flow between objects according to an embodiment of the invention.
Fig. 3 is a UML (unified modeling language) diagram illustrating the classes of an embodiment of the present invention.
Fig. 4 is a UML sequence diagram illustrating one example execution path for an embodiment of the invention.

### DETAILED DESCRIPTION OF THE PREFERRED EMBODIMENTS

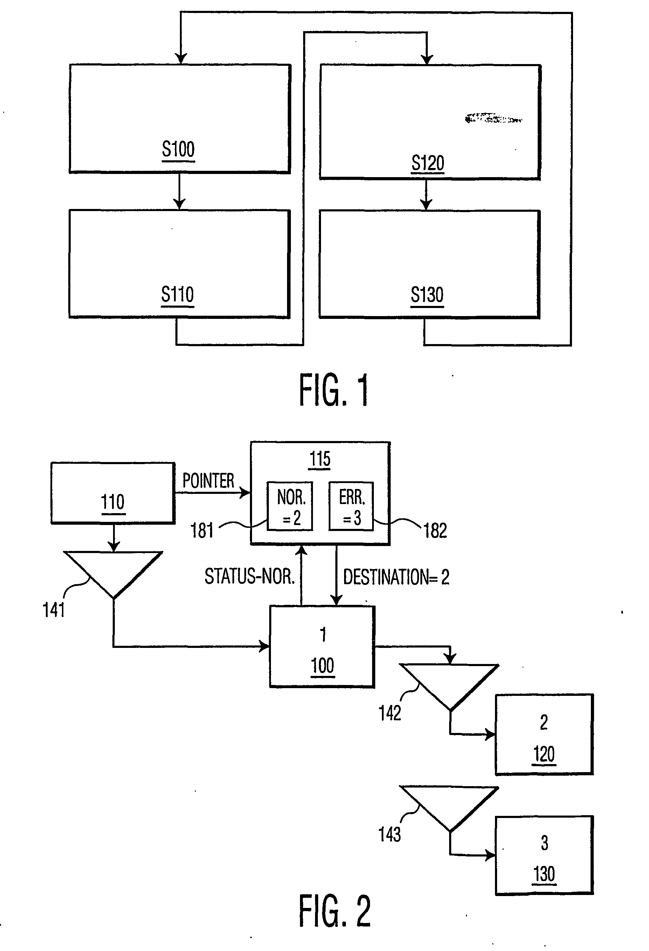

Referring to Fig. 1, processing objects in a program accept data from a queue in a first step S100. The processing object performs a data operation on the data object S110. The processing object determines a status relating to the processing of the data object, for example, whether the process was completed normally or with a fault in step S110. To determine a destination queue to which the data object is to be placed, the processing object examines, or uses, data in the data object's path object in step S120. Then the processing object places the data object in the referenced queue in step S130.

The step of determining a status relating to the data object in step S110 is not essential to the invention. The status, according to an embodiment, may include normal and faulty results of processing.

Referring to Fig. 2, in an embodiment of the invention, an Nth data object 110 is placed in a queue 141 for a processing object 1 100. The processing object 1 100 processes the Nth data object 110 and queries an Nth data object's path object 115 which stores a table of queue indicators. In this embodiment, normal and faulty outcome states are defined for the processing object 1 100. When the processing object 1 100 determines the outcome of its internal processing, an indicator of this outcome points to an indicator 181, 182 stored on the Nth data object's path object 115 that refers to a particular queue to which the Nth data object 110 should next be placed. In the example, the status indicates normal and the queue 142 to which the selected indicator 181 points is that for processing object 2 120. The processing object 1 100 places the Nth data object 110 in the queue 142 in response to the receipt of a message so indicating.

As a result of the above pipelined structure, the data object in this system determines its own destiny by it association with a path object. As a result, routing issues can be defined and adjusted in each path object rather than by programming this directly in the processing objects. Each processing object may be programmed to insure that a path object is queried to determine the destination of the data object once processing is complete. Note that a single path object can serve multiple data objects and vice versa according to the way in which the programmer chooses the package the information.

A condition, for example whether the processing object completed its process normally or anomalously, may not be present. The path object could simply carry a pointer respective of the current processing object indicating the destination queue. Also, the destination queue could be derived from a formula rather than simply static pointer. Further, the path data in the Nth data object's path object 115 can be incorporated directly in the data object itself.

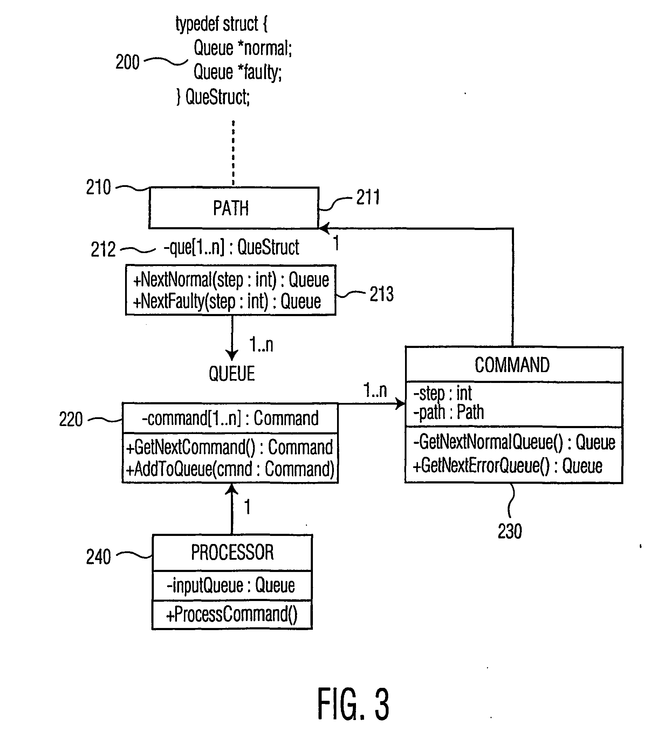

Fig. 3 is a UML class diagram (static model) showing the structure of, and relationship between, objects in the system. Each rectangular box, e.g., path class 210, represents a class (potentially one or more objects). The box is divided horizontally into three sections, e.g., 211, 212, 213. A top section, e.g., 211, contains the class name. A middle section, e.g., 212, contains the class data; represented by the notation [+-] [name]: [type] where "+" and "-" indicates public and private data, respectively, "name" is an identifier for the unique instance of a given type of data, and "type" is the type of the data (possibly another class). The bottom section, e.g., 213, contains the class functions (computer code); represented by the notation [+-][func_name]([arg_N_name]:[type_N]):[func_type] where "+" and "-" indicates public and private functions respectively, "func_name" is the function's name, "arg_N_name" identifies the Nth argument passed to the function, "type_N" is the type of the Nth argument, and func_type is the type returned by the function.

In Fig. 3 the Processor class 240 represents a processing object. It has an input queue and a function to process the command data. The Queue class 220 represents a queue of commands. It has functions to return the next command object in the queue and to add a command object to the queue. The command class 230 represents the data that the processing object instance of the Processor Class 240 will process. It keeps track of its position in the command path using a step variable. It has one path and accessor functions to return the next queue. The path class 210 represents a unique path through the system. It may be defined as an array of queue structures as detailed in the note 200.

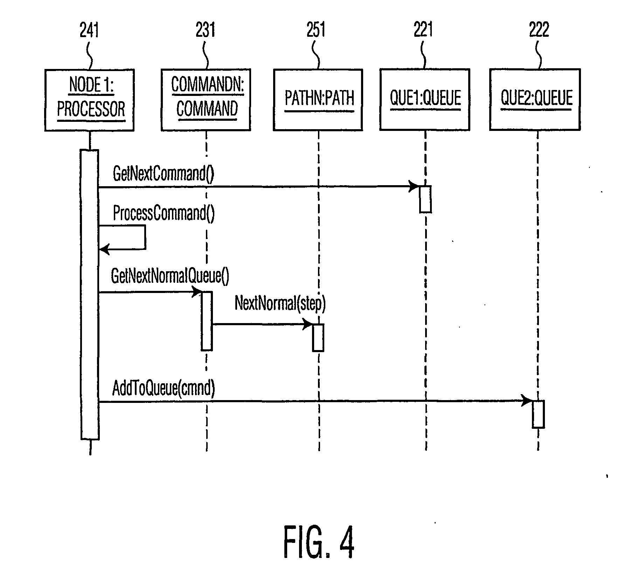

Fig. 4 is a UML sequence (dynamic model) showing one example of the possible interactions between instances of the objects defined in the class diagram. The boxes arranged horizontally across the top of the figure are objects (instances of the same classes from Fig. 3). The notation is [name]:[type] where "name" uniquely identifies and instance of "type", which is a class. The dashed line descending from each object is its life line. The boxes superimposed over the life lines represent activity of the respective object. The horizontal lines between the activity boxes represent messages between the objects, with the arrow indicating the direction of flow. The text above each message is the name of the function call pertaining to the message. Time flows from top to bottom in the diagram.

In Fig. 4 an unspecified event activates Nodel 241. Subsequently Nodel 241 makes a call (sends a message) to Que1 221, specifically GetNextCommand. Que1 221 returns the next available command object (data object), commandN 231 (a generic representation of any command in the system). Next, Node1 241 performs requisite processing on the command object. When processing is finished Node1 241 calls GetNextNormalQueue on commandN 231. CommandN 231 delegates the call to NextNormalStep on its path, pathN 251 (a generic representation of commandN's 231 path object), passing its step as an argument. PathN 251 returns the requested Queue object (Que2 222 in this example), in this case the next normal queue. Finally, Nodel 241 calls AddToQueue on Que2 222, passing the current command object 231 as its argument. This ends the sequence of events for the diagram in Fig. 4. Typically the sequence would subsequently repeat.

Note that while in the embodiments described above, the path object is described as an object that is separate from the data object to which it relates, it is clear that the path object may be incorporated within the data object.

## Claims

1. A method of determining the flow of a data object in a software architecture using queues to organize the transfer of data from one processing object to another, comprising the steps of:
storing queue identifiers (181, 182) in a command path object (115);
associating a data object (110) with said path object (115);
receiving and processing said data object (110) in a first of said processing objects (100);
identifying a queue (142) corresponding to a second of said processing objects (120) responsively to an indicator in said path object (115); and
placing said data object in a queue identified in said step of identifying.

2. A method as in claim 1, wherein said step of identifying includes determining a result of said step processing.

3. A method as in claim 2, wherein said step of identifying includes determining a result of said step of processing and said result corresponding to said queue.

4. A pipeline software architecture in which data objects are transferred from a first processing object to a selected one of second and third processing objects by queing it in a queue of selected one, comprising:
a definition of a command path object corresponding to each of said data objects;
at least one of said command path objects containing an indicator of at least one of said second and third processing object;
said first processing object defining a process a result of which is to ensure that a first data object processed by said first processing object is placed in a queue of said at least one of said second and third processing objects responsively to one of said command path objects corresponding to said first data object.

5. An architecture as in claim 4, wherein said process includes the generation of an indication of a result of a subprocess of said first processing object and said first data object processed by said first processing object is placed in said queue of said at least one of said second and third processing objects responsively to one of said command path objects corresponding to said first data object and responsively to said indication.

## Patentansprüche

1. Verfahren zum Ermitteln des Stromes eines Datenobjektes in einer Software-Architektur unter Verwendung von Schlangen zum Organisieren der Übertragung von Daten von einem Verarbeitungsobjekt zu einem anderen, wobei dieses Verfahren die nachfolgenden Verfahrensschritte umfasst:
- das Speichern von Schlangenidentifizierern (181, 182) in einem Befehlswegobjekt (115);
- das Assoziieren eines Datenobjektes (110) mit dem genannten Wegobjekt (115);
- das Empfangen und Verarbeiten des genannten Datenobjektes (110) in einem ersten Objekt der genannten Verarbeitungsobjekte (100);
- das Identifizieren einer Schlange (142) entsprechend einem zweiten Objekt der genannten Verarbeitungsobjekte (120) in Reaktion auf einen Indikator in dem genannten Wegobjekt (115); und
- das Unterbringen der genannten Daten in eine Schlange, die in dem genannten Schritt der Identifizierung identifiziert worden ist.

2. Verfahren nach Anspruch 1, wobei der genannte Schritt der Identifikation das Bestimmen eines Ergebnisses der genannten Schrittverarbeitung umfasst.

3. Verfahren nach Anspruch 2, wobei der genannte Schritt der Identifikation das Bestimmen eines Ergebnisses des genannten Schrittes der Verarbeitung umfasst und das genannte Ergebnis der genannten Schlange entspricht.

4. Pipeline-Softwarearchitektur, wobei Datenobjekte von einem ersten Verarbeitungsobjekt zu einem selektierten Objekt von zweiten und dritten Verarbeitungsobjekten transportiert werden durch Unterbringung derselben in eine Schlange von selektierten Objekten, was Folgendes umfasst:
- eine Definition eines Befehlswegobjektes entsprechend jedem der genannten Datenobjekte,
- dass wenigstens eines der genannten Befehlswegobjekte einen Indikator wenigstens eines der genannten zweiten und dritten Verarbeitungsobjekte aufweist,
- das genannte erste Verarbeitungsobjekt einen Prozess definiert, wobei ein Ergebnis davon ist, dass gewährleistet wird, dass ein erstes Datenobjekt, das von dem genannten ersten Verarbeitungsobjekt verarbeitet worden ist, in eine Schlange des genannten wenigstens einen Objektes der genannten zweiten und dritten Verarbeitungsobjekte untergebracht wird, und zwar in Reaktion auf eines der genannten Befehlswegobjekte entsprechend dem genannten ersten Datenobjekt.

5. Architektur nach Anspruch 4, wobei der genannte Prozess die Erzeugung einer Angabe eines Ergebnisses eines Subprozesses des genannten ersten Verarbeitungsobjektes umfasst, und das genannte erste Datenobjekt, das von dem genannten ersten Verarbeitungsobjekt verarbeitet worden ist, in die genannte Schlange des genannten wenigstens einen Objektes der genannten zweiten und dritten Verarbeitungsobjekte untergebracht wird, und zwar in Reaktion auf ein Objekt der genannten Befehlswegobjekte entsprechend dem genannten ersten Datenobjekt und in Reaktion auf die genannte Angabe.

## Revendications

1. Procédé de détermination du flux d'un objet de données dans une architecture logicielle utilisant des files pour organiser le transfert de données d'un objet de traitement à l'autre, comprenant les étapes :
d'enregistrement d'identificateurs de files (181,182) dans un objet de chemin de commande (115) ;
d'association d'un objet de données (110) avec ledit objet de chemin (115) ;
de réception et de traitement dudit objet de données (110) dans un premier desdits objets de traitement (100) ;
d'identification d'une file (142) correspondant à un deuxième desdits objets de traitement (120) en réponse à un indicateur dans ledit objet de chemin (115); et
de placement dudit objet de données dans une file identifiée dans ladite étape d'identification.

2. Procédé selon la revendication 1 dans lequel ladite étape d'identification comprend la détermination d'un résultat dudit traitement d'étape.

3. Procédé selon la revendication 2, dans lequel ladite étape d'identification comprend la détermination d'un résultat de ladite étape de traitement et dudit résultat correspondant à la ladite file.

4. Architecture logicielle de pipeline dans laquelle les objets de données sont transférés d'un premier objet de traitement à un objet choisi des deuxième et troisième objets de traitement en le mettant dans une file sélectionnée comprenant :
la définition d'un objet de chemin de commande correspondant à chacun desdits objets de données;
au moins un desdits objets de chemin de commandes contenant un indicateur d'au moins un desdits deuxième et troisième objets de traitement ;
ledit premier objet de traitement définissant un processus qui a pour résultat de garantir qu'un premier objet de données traité par ledit premier objet de traitement est placé dans une file dudit au moins un des deuxième et troisième objets de traitement en réponse à l'un desdits objets de chemin de commande correspondant audit premier objet de données.

5. Architecture selon la revendication 4, dans laquelle ledit procédé comprend la génération d'une indication d'un résultat d'un sous-processus dudit premier objet de traitement et ledit premier objet de données traité par ledit premier objet de traitement est placé dans ladite file d'au moins un desdits deuxième et troisième objets de traitement en réponse à celle desdits objets de chemin de commande correspondant audit premier objet de données et, en réponse, à ladite indication.
